# EUROPÄISCHE PATENTSCHRIFT

(11) **EP 1 604 124 B1**
(45) Veröffentlichungstag und Bekanntmachung des Hinweises auf die Patenterteilung: **23.08.2006**
(21) Anmeldenummer: 04715254.1
(22) Anmeldetag: 27.02.2004
(51) Int. Cl.: F16C 11/04

(54) **Gelenkverbindung**
Joint
Articulation

(30) Priorität: 11.03.2003 DE 10311679
(43) Veröffentlichungstag der Anmeldung: 14.12.2005
(73) Patentinhaber: Brose Fahrzeugteile GmbH & Co. KG, Coburg, 96450 Coburg (DE)
(72) Erfinder: PRAUSE, Markus, 96450 Coburg (DE)
(74) Vertreter: Baumgärtel, Gunnar
(86) Internationale Anmeldenummer: PCT/DE2004/000419
(87) Internationale Veröffentlichungsnummer: WO 2004/081397

(56) Entgegenhaltungen:
- CH-A- 435 871
- DE-A- 4 213 831
- DE-A- 19 627 288
- DE-A- 19 945 371
- US-A- 3 561 792
- US-A- 4 775 273
- US-A1- 2002 125 049

## Beschreibung

Die Erfindung betrifft eine Gelenkverbindung nach dem Oberbegriff des Anspruchs 1.

Aus der DE 195 31 278 C1 ist eine Gelenkverbindung bekannt, bei der ein Mantelrohr und eine Strebe mit radialem Spiel auf einer als Lagerachse dienenden Durchsteckschraube drehbar gelagert sind. Mittels zweier separater Lagerbuchsen, die jeweils einen herausstehenden Längsabschnitt der Lagerachse umschließen, wird die Lagerachse spielfrei innerhalb des Bauteils gehalten. Die im wesentlichen zylindrisch ausgeführten Lagerbuchsen weisen hierzu einen konisch abgeschrägten Endbereich auf, der in einen durch eine Fase erweiterten, spielbedingten Lagerspalt zwischen dem gelagerten Bauteil und der Durchsteckschraube eingreift. Mittels axialer Krafteinwirkung werden die Lagerbuchsen jeweils mit ihrem konisch angeschrägten Endbereich, der in radialer Richtung federelastisch ausgebildet ist, in den Lagerspalt hineingedrückt und durch die Keilwirkung bei Überdeckung des radialen Spiels gegen die äußere Mantelfläche der Durchsteckschraube gepresst.

Aus der US 2002/0125049A1 ist eine Sitzgewichtsmessvorrichtung mit einer Lagerstruktur bekannt. Diese umfasst eine Gelenkverbindung mit einer Steckbuchse, die verschiedenartig geformte Federbereiche aufweist, wodurch das radiale Spiel eines in der Buchse lagernden Bolzens ausgeglichen wird.

Einfache Gelenkverbindungen in Form von radialen Drehgelenken, wie sie beispielsweise zwischen Hebeln einer Sitzhöhenverstellung in Kraftfahrzeugen verwendet werden, bestehen üblicherweise aus einem axial gesicherten Gelenkbolzen, der durch Bohrungen in an den Hebeln angeformte Buchsen greift und diese drehbar miteinander verbindet. Zwischen mindestens einer Buchse und dem Bolzen muss ein ausreichendes Mindestspiel vorhanden sein, um eine relative Drehbewegung zwischen den miteinander verbundenen Hebeln zu ermöglichen und um eine leichte Montage zwischen den Hebeln und dem Gelenkbolzen zu gewährleisten.

Aufgrund des notwendigen radialen Mindestspiels kann es, z.B. durch Erschütterungen, zu radialen Relativbewegungen zwischen dem Gelenkbolzen und der Buchse kommen, was zu Klack-Geräuschen und damit zu Komforteinbußen führt. Darüber hinaus können durch die Relativbewegungen und daraus resultierende häufige Lastwechsel Ermüdungserscheinungen im Werkstoff der Buchse oder des Gelenkbolzens auftreten. Eine weitere Verringerung des Spiels zur Vermeidung der radialen Relativbewegungen ist jedoch häufig nicht möglich, da sonst eine Presspassung vorliegt und im Gelenk keine oder nur noch eine eingeschränkte Drehbewegung zwischen der Buchse und dem Gelenkbolzen möglich ist.

Der Erfindung liegt die Aufgabenstellung zugrunde, ein Spielausgleichselement für eine Gelenkverbindung der eingangs genannten Art zu schaffen, das bei einem einfachen Zusammenbau der Gelenkverbindung und mit geringem Herstellungsaufwand auch bei großen Toleranzen der Gelenkverbindung ohne die Gefahr eines Verkeilens von Gelenkbolzen oder Gelenkrohr und Gelenkbuchse radiale Relativbewegungen zwischen den Gelenkteilen dauerhaft unterdrückt.

Diese Aufgabe wird erfindungsgemäß durch eine Gelenkverbindung mit den Merkmalen des Anspruchs 1 gelöst.

Danach weist die Gelenkverbindung ein vorzugsweise axial montierbares Spielausgleichselement auf, das das radiale Spiel eines ringförmigen Lagerspalts zwischen einer Gelenkbuchse und einem drehbar in der Gelenkbuchse gelagerten Gelenkbolzen oder Gelenkrohr der Gelenkverbindung ausgleicht und mehrere in den ringförmigen Lagerspalt greifende Federbereiche aufweist, deren Radien kleiner sind als der Radius des ringförmigen Lagerspalts.

Für den Einsatz des Spielausgleichselements sowohl zum Spielausgleich als auch zur axialen Sicherung der Gelenkverbindung stützt sich mindestens ein Klemmbereich des Spielausgleichselements am Gelenkbolzen oder Gelenkrohr ab.

Die erfindungsgemäße Lösung stellt ein Spielausgleichselement für eine Gelenkverbindung zur Verfügung, das bei geringem Herstellungsaufwand einen einfachen Zusam menbau der Gelenkverbindung ermöglicht und auch bei großen Toleranzen der Gelenkverbindung radiale Relativbewegungen zwischen dem Gelenkbolzen oder Gelenkrohr und der Gelenkbuchse ohne die Gefahr eines Verkeilens dieser Gelenkteile unterdrückt. Dabei ist eine leichtgängige Drehbewegung zwischen dem Gelenkbolzen bzw. Gelenkrohr und der Gelenkbuchse sichergestellt.

Die Federbereiche sind sowohl in axialer als auch in radialer Richtung federelastisch ausgebildet, so dass der Spielausgleich der Gelenkteile dauerelastisch und unter Berücksichtigung von Verschleißerscheinungen ohne die Gefahr eines Klemmens oder Verkeilens der Gelenkteile gesichert ist.

Das Spielausgleichselement kann wahlweise einen scheiben- oder napfförmigen Grundkörper aufweisen, über den die Federbereiche hinausragen und einen spitzen Winkel zur Gelenkachse einschließen.

Der Radius der in den ringförmigen Lagerspalt greifenden Federbereiche des Spielausgleichselements ist in Bezug auf den Radius des Gelenkbolzens bzw. Außenradius des Gelenkrohrs so bemessen, dass die Federbereiche mit ihrer randseitigen Kontur linienförmig am Gelenkbolzen oder Gelenkrohr anliegen. Dadurch wird ein Verkeilen oder eine durch erhöhte Reibung bedingte Schwergängigkeit zwischen den Gelenkteilen vermieden. Darüber hinaus sorgt die federnde Anlage des Spielausgleichselements an den Gelenkteilen für eine Überbrückung auch großer Toleranzen ohne die Gefahr des Auftretens von Klappergeräuschen oder eines Verkeilens zwischen den Gelenkteilen.

Weiterhin können die im ringförmigen Lagerspalt eingepassten Federbereiche mit einem Teil ihrer nach außen gerichteten Fläche in einem Bereich zwischen den linienförmigen Anlagen der Federbereiche am Gelenkbolzen an der Gelenkbuchse anliegen.

Die in den ringförmigen Lagerspalt eingepassten Federbereiche sind somit derart vom Grundkörper abgewinkelt und geformt, dass sie infolge ihres gegenüber dem Radius des Gelenkbolzens oder Gelenkrohrs kleinerem Radius und infolge der federelastischen Ausbildung der Federbereiche sowohl in axialer als auch in radialer Richtung linienförmig am Gelenkbolzen und flächenförmig in einem Bereich zwischen den linienförmigen Anlagen am Gelenkbolzen an der Gelenkbuchse anliegen.

Vorzugsweise weist das Spielausgleichselement mindestens drei an seinem Umfang gleichmäßig verteilte Federbereiche auf, die insbesondere aus einem geformten und vergüteten Federstahl bestehen.

Wenn der auf den Mittelpunkt des Spielausgleichselements bezogene Außenradius der gewölbten Federbereiche größer oder zumindest gleich dem Innenradius der Gelenkbuchse ist, werden die Federbereiche beim Einfügen in den ringförmigen Lagerspalt nach innen auf den Gelenkbolzen bzw. das Gelenkrohr gedrückt und dadurch eine spielfreie und federnde Abstützung zwischen dem Gelenkbolzen oder Gelenkrohr und der Gelenkbuchse erzielt.

Der napfförmige Grundkörper kann mit entsprechender Auswölbung auf der den Federbereichen entgegengesetzten Seite des Grundkörpers Sicherungsfunktionen übernehmen. Die nicht rechtwinklig vom Grundkörper abstehenden Federbereiche, die mit spitzem Winkel zur Gelenkachse vom Grundkörper abstehen, ermöglichen ein leichtes Einfügen der Spielausgleichselemente in den Lagerspalt bzw. eine Verbindung des Spielausgleichselements mit dem Gelenkbolzen vor dessen Einsetzen in die Gelenkbuchse.

Das mit Klemmfunktion ausgestattete Spielausgleichselement eignet sich somit sowohl zum Spielausgleich zwischen einer Gelenkbuchse und einem Gelenkbolzen bzw. Gelenkrohr als auch in erweiterter Funktion als axiales Sicherungselement, so dass auf eine zusätzliche Sicherung der Gelenkverbindung beispielsweise durch einen flanschartigen Abschluss des Gelenkbolzens bzw. Gelenkrohrs verzichtet werden kann.

Mindestens ein Klemmbereich ragt insbesondere über die den Federbereichen entgegengesetzte Seite des Grundkörpers des Spielausgleichselements hinaus und liegt kraft- und/oder formschlüssig am Gelenkbolzen oder Gelenkrohr an, so dass keine zusätzliche axiale Sicherung der Gelenkverbindung erforderlich ist

Vorzugsweise ist der Grundkörper napfförmig ausgebildet und weist an seinem Umfang gleichmäßig verteilte Klemmbereiche auf, die insbesondere als stegartige Klemmelemente in den Grundkörper integriert sind Eine bevorzugten Ausgestaltung der erfindungsgemäßen Lösung ist dadurch gekennzeichnet, dass die Klemmbereiche zwischen den Federbereichen angeordnet sind und insbesondere jeweils drei Feder- und Klemmbereiche abwechselnd am Umfang des Grundkörpers über die eine und andere Seite des Grundkörpers hinausragen und jeweils einen kleinen radialen Ausschnitt zur Entkopplung der Wirkungen der Feder- und Klemmbereiche zwischen sich einschließen.

Wenn der auf den Mittelpunkt des Spielausgleichselements bezogene Grund- oder Innenradius des Spielausgleichselements größer oder gleich dem Radius des Gelenkbolzens bzw. Außenradius des Gelenkrohrs ist, kann das Spielausgleichselement einfach und ohne zusätzliche Hilfsmittel auf den Gelenkbolzen bzw. das Gelenkrohr aufgesteckt werden.

Zur bündigen Anlage des Spielausgleichselements liegt der Grundkörper des Spielausgleichselements an einer Stirnfläche der Gelenkbuchse an.

Bei einem napfförmig ausgebildeten Grundkörper liegt der Grundkörper des Spielausgleichselements mit einer parallel zur Stirnfläche der Gelenkbuchse verlaufenden ringförmigen Anlagefläche an der Stirnfläche der Gelenkbuchse an, wodurch eine maximale radiale Verspannung der Federbereiche im ringförmigen Lagerspalt erzielt wird.

Das einstückige Spielausgleichselement reduziert die Einzelteilkosten der zu verbindenden Gelenkteile, da es allein in der Lage ist, sowohl den Spielausgleich als auch eine axiale Sicherung der Gelenkverbindung zu gewährleisten. Aufgrund seiner Fähigkeit, auch große Toleranzen zu überbrücken, ermöglicht es eine Toleranzerweiterung der Gelenkteile bis hin zu Freimaßtoleranzen. Dabei können unterschiedliche Durchmesser der Lagerpaarung und unterschiedliche Anforderungen der Axialsicherung der Gelenkverbindung durch unterschiedliche Materialarten, unterschiedliche Materialdicken und unterschiedliche Vergütungsstufen des Spielausgleichselements erfüllt werden.

Anhand eines in der Zeichnung dargestellten Ausführungsbeispiels soll der der Erfindung zugrunde liegende Gedanke näher erläutert werden. Es zeigen:
- Fig. 1: eine perspektivische Darstellung eines Sitzuntergestells für ein Kraftfahrzeug mit einer Gelenkverbindung zwischen einem Gelenkrohr und Sitzseitenteilen bzw. Schwenkstützen einer Höhenverstelleinrichtung des Kraftfahrzeugsitzes;
- Fig. 2: eine perspektivische Darstellung des erfindungsgemäßen Spielausgleichselements;
- Fig. 3: eine Draufsicht auf das Spielausgleichselement gemäß Fig. 2 von der Seite der Federbereiche;
- Fig. 4: eine Seitenansicht des Spielausgleichselements gemäß Fig. 2;
- Fig. 5: eine Draufsicht auf das Spielausgleichselement gemäß Fig. 2 von der Seite der Klemmbereiche;
- Fig. 6: eine Draufsicht auf die Gelenkverbindung gemäß Fig. 1 mit einem Spielausgleichselement entsprechend den Fig. 2 bis 5;
- Fig. 7: eine Seitenansicht der Gelenkverbindung gemäß Fig. 6;
- Fig. 8: einen Schnitt durch die Gelenkverbindung gemäß Fig. 7 entlang der Linie VIII - VIII;
- Fig. 9: einen Schnitt durch die Gelenkverbindung gemäß Fig. 6 entlang der Linie IX-IX;
- Fig. 10: eine vergrößerte Darstellung des Details X gemäß Fig. 9 und
- Fig. 11: eine vergrößerte Darstellung des Details XI gemäß Fig. 8.

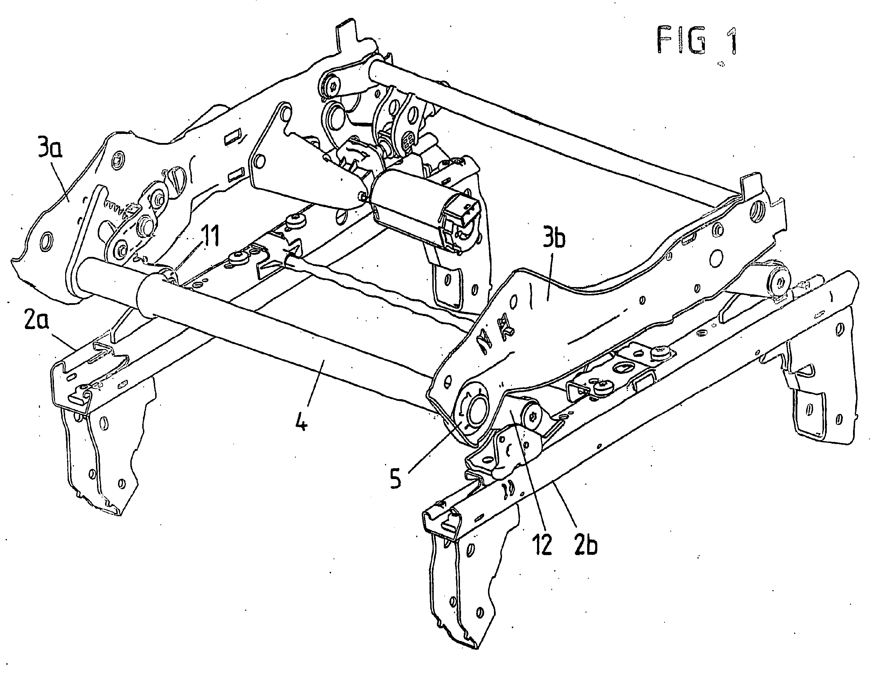

Fig. 1 zeigt in perspektivischer Ansicht ein Sitzuntergestell eines längs- und höhenverstellbaren Fahrzeugsitzes mit zwei Schienenlängsführungen 2a und 2b einer Längsverstelleinrichtung des Fahrzeugsitzes mit jeweils einer mit einem Fahrzeugboden verbundenen Unterschiene, in der jeweils eine Oberschiene in Längsrichtung verstellbar geführt ist.

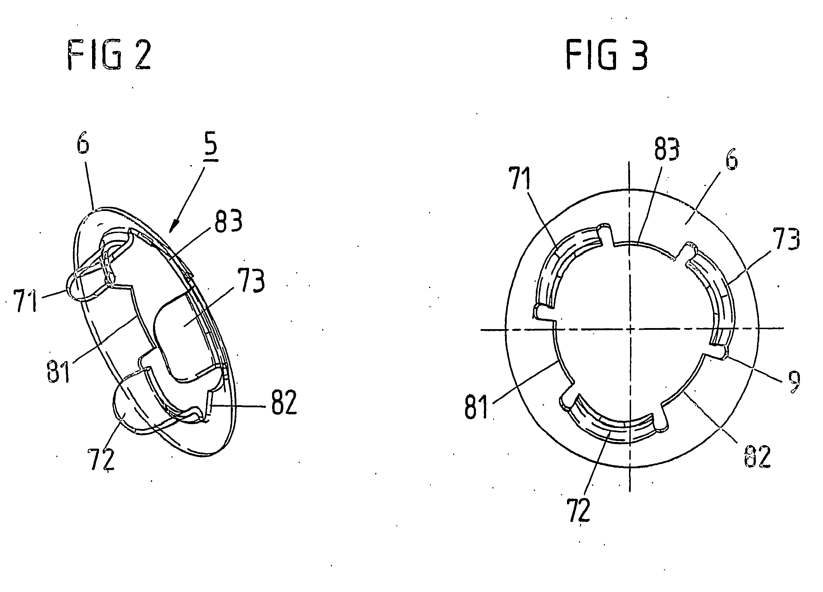

An den hinteren Enden der Oberschienen sind hintere Lagerböcke befestigt, an denen hintere Schwenkstützen 11, 12 gelagert sind, die mit einem Querrohr verbunden sind, dessen Enden durch Bohrungen im hinteren Ende der Sitzseitenteile 3a, 3b des Fahrzeugsitzes unter Bildung einer Gelenkverbindung gesteckt sind, bei der die Enden des Querrohrs einen in den Fig. 2 bis 11 dargestellten Gelenkbolzen oder eine Gelenkrohr 4 und die Bohrungen oder Durchzüge im hinteren Ende der Sitzseitenteile 3a, 3b eine Gelenkbuchse 3 bilden.

Die Gelenkverbindung zwischen dem Gelenkbolzen oder Gelenkrohr 4 und der Gelenkbuchse 3 erfolgt über ein Spielausgleichselement 5, das in dieser Funktion auch als Sicherungselement zur Sicherung der Gelenkverbindung zwischen dem Gelenkrohr 4 und den die Gelenkbuchse 3 bildenden Bohrungen oder Durchzügen in den Sitzseitenteilen 3a, 3b dient, während die Schwenkstützen 11, 12 fest mit dem Querrohr 4a verbunden sind.

Zum Ausgleich von radialen Toleranzen des Gelenkrohrs 4 und der Gelenkbuchse 3 ist zwischen beiden Gelenkteilen 3, 4 ein ringförmiger Lagerspalt vorgesehen, der durch das erfindungsgemäße Spielausgleichselement 5 überbrückt wird.

Das Spielausgleichselement 5 ist in perspektivischer Ansicht und in verschiedenen Seitenansichten in den Fig. 2 bis 5 dargestellt und besteht aus einem napfförmigen Grundkörper 6, von dem zur Seite des größeren Durchmessers des napfförmigen Grundkörpers 6 drei Federbereiche 71, 72, 73 abgebogen sind. Auf der Seite des kleineren Durchmessers des napfförmigen Grundkörpers 6 sind drei Klemmbereiche 81, 82, 83 abgewinkelt und stehen als laschenförmige Stege vom Grundkörper 6 ab. Die Federbereiche 71, 72, 73 sowie die Klemmbereiche 81, 82, 83 sind abwechselnd am Innendurchmesser des Grundkörpers 6 angeordnet und durch Ausnehmungen 9 voneinander entkoppelt.

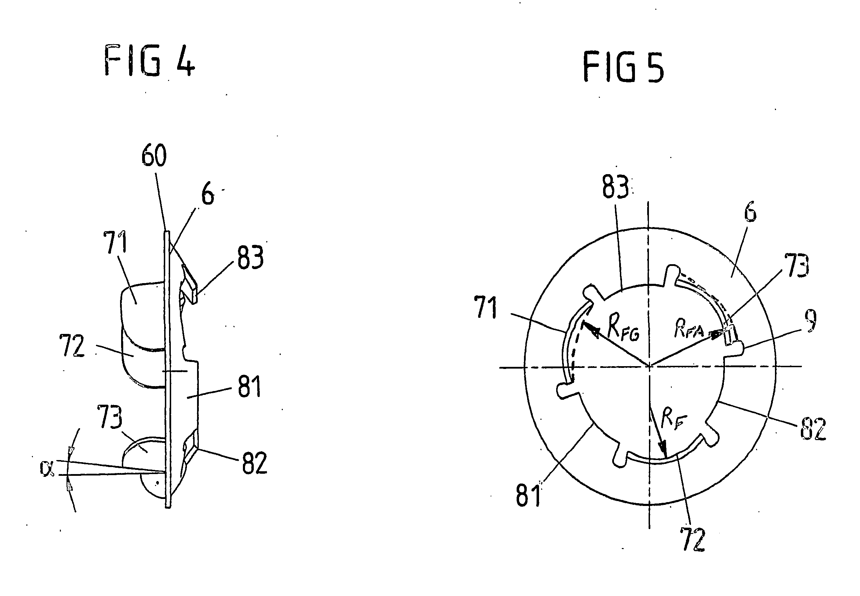

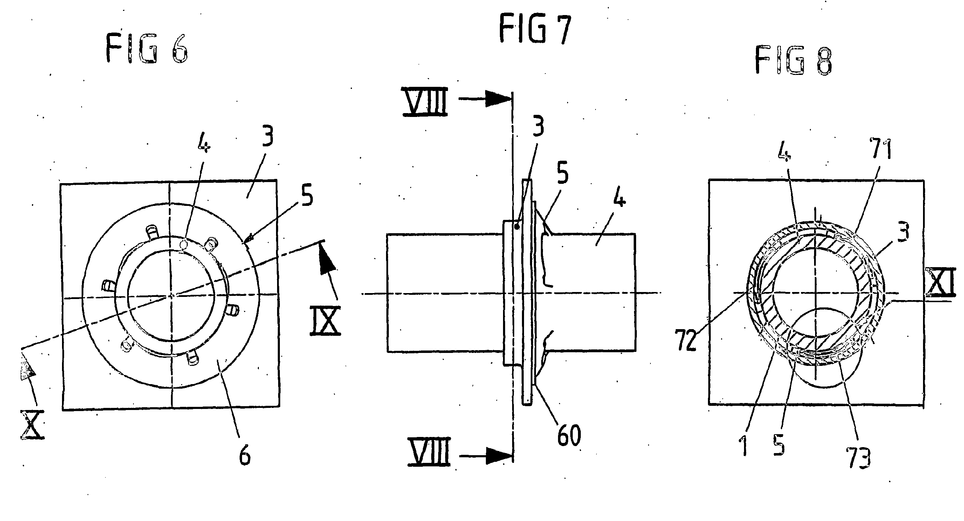

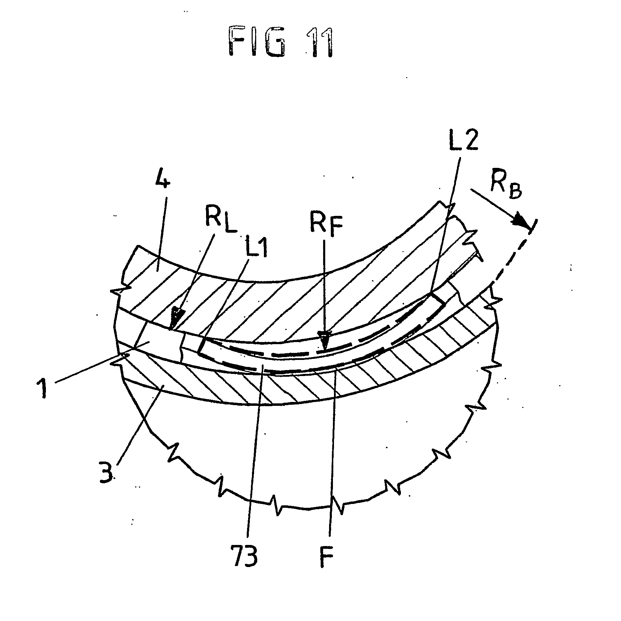

Die Federbereiche 71, 72, 73 sind entsprechend den Fig. 5 und 11 mit einem Radius R_{F} gewölbt ausgeführt, der kleiner ist als der Außenradius R_{L} des Gelenkrohrs 4, und gemäß Fig. 4 mit einem spitzen Winkel α gegenüber der Lagerachse nach innen geneigt. Sie bilden federnde Ausgleichsbereiche insbesondere aus einem Federstahl, der zunächst entsprechend der Darstellung gemäß den Fig. 2 bis 4 geformt und anschließend vergütet wird.

Wie insbesondere der Fig. 11 zu entnehmen ist, bewirkt die Relation der Radien RF und RL, dass die im ringförmigen Lagerspalt 1 eingepassten Federbereiche 71, 72, 73 mit ihrer randseitigen Kontur linienförmig am Gelenkbolzen 4 anliegen und mit einem Teil ihrer nach außen gerichteten Fläche in einem Bereich zwischen den linienförmigen Anlagen der Federbereiche am Gelenkbolzen 4 an der Gelenkbuchse 3 anliegen.

Der auf den Mittelpunkt des Spielausgleichselements 5 bezogene, gestrichelt dargestellte Außenradius R_{FA} der gewölbten Federbereiche 71, 72, 73, d.h. der Radius einer an die Wölbungen angelegten Tangente, ist vorzugsweise größer oder höchstens gleich dem Innenradius R_{B} der Gelenkbuchse 3, während der auf den Mittelpunkt des Spielausgleichselements 5 bezogene, ebenfalls gestrichelt dargestellte Grund- oder Innenradius R_{FG} des Spielausgleichselements 5 größer oder gleich dem Radius des Gelenkbolzens 4 bzw. Außenradius des Gelenkrohrs 4 ist.

Dadurch werden einerseits die Federbereiche 71, 72, 73 beim Einfügen in den ringförmigen Lagerspalt nach innen auf den Gelenkbolzen bzw. das Gelenkrohr 4 gedrückt und dadurch eine spielfreie und federnde Abstützung zwischen dem Gelenkbolzen oder Gelenkrohr 4 und der Gelenkbuchse 3 erzielt und andererseits kann das Spielausgleichselement 5 einfach und ohne zusätzliche Hilfsmittel auf den Gelenkbolzen bzw. das Gelenkrohr 4 aufgesteckt werden.

Erfüllt das in den Fig. 2 bis 5 dargestellte Spielausgleichselement 5 ausschließlich eine Spielausgleichsfunktion, so kann auf die Klemmbereiche 81, 82, 83 verzichtet werden, wenn das Spielausgleichselement 5 beispielsweise zwischen zwei Flansche der Gelenkteile der Gelenkverbindung angeordnet ist und nur den zum Toleranzausgleich der Gelenkteile vorgesehenen ringförmigen Lagerspalt überbrückt.

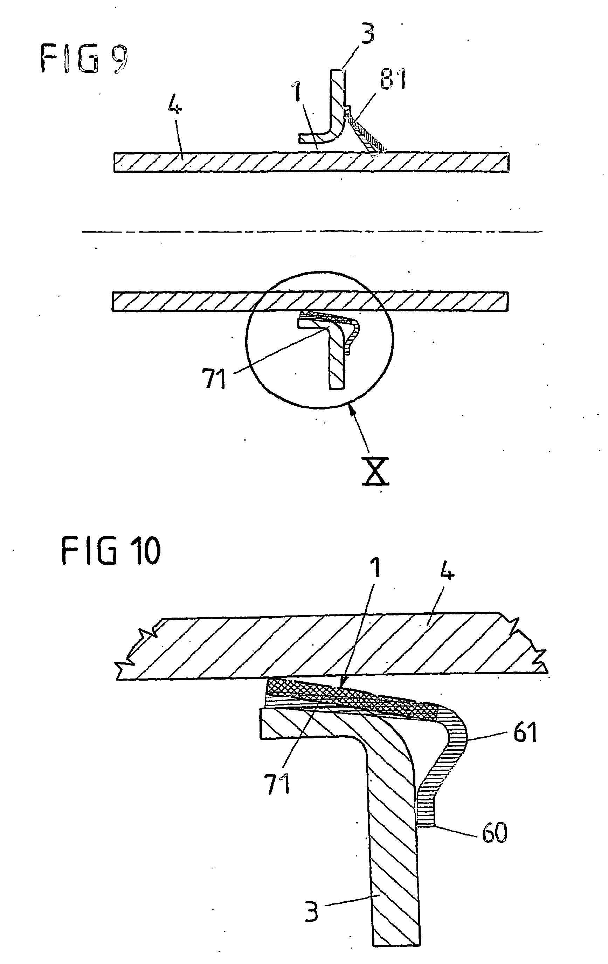

Dient das Spielausgleichselement 5 sowohl zum Spielausgleich als auch zur Sicherung der Gelenkverbindung, so ist es vorzugsweise in der in den Fig. 2 bis 5 dargestellten Weise ausgebildet, d.h. mit zusätzlichen Klemmbereichen 81, 82, 83, die in dieser Ausführungsform aus dem Abbiegen der Federbereiche 71, 72, 73 zur gegenüberliegenden Seite des Grundkörpers 6 als zungenförmige Stege herausgebildet sind. Der äußere Umfang des Grundkörpers 6 bildet eine flanschförmige Anlage 60, die bei der Verbindung der Gelenkteile an der Stirnfläche30 der Gelenkbuchse 3 gemäß den Fig. 7 und 9 zur Anlage kommt.

In den Fig. 6 bis 8 ist die Gelenkverbindung zwischen dem als Gelenkbolzen 4 ausgebildeten Querrohr 4a und der die Gelenkbuchse 3 bildenden Bohrung in den Sitzseitenteilen 3a, 3b gemäß Fig. 1 in Verbindung mit dem Spielausgleichselement 5 in einer Stirnseitenansicht (Fig. 6), einer Seitenansicht (Fig. 7) und in einem Schnitt entlang der Linie VIII-VIII gemäß Fig. 7 in Fig. 8 dargestellt.

Zur Herstellung und Sicherung der Gelenkverbindung sowie zum Spielausgleich und Überbrückung des zwischen dem Gelenkbolzen 4 und der Gelenkbuchse 3 ausgebildeten ringförmigen Lagerspalts 1 wird das Spielausgleichselement 5 auf den Gelenkbolzen 4 aufgesteckt und mit seinen Federbereichen 71, 72, 73 in den zwischen dem Gelenkbolzen 4 und der Gelenkbuchse 3 ausgebildeten ringförmigen Lagerspalt 1 eingeschoben. Kommt der ringförmige Flansch 60 des Grundkörpers 6 des Spielausgleichselements 5 zur Anlage an der Stirnfläche 30 der Gelenkbuchse 3, so sind die Federbereiche 71, 72, 73 zwischen den Oberflächen des Gelenkbolzens 4 und der Gelenkbuchse 3 maximal verspannt.

Fig. 9 zeigt in einer vergrößerten Detailansicht einen Schnitt durch die Gelenkverbindung entsprechend der Linie IX-IX gemäß Fig. 6 und zeigt den zwischen dem Gelenkbolzen 4 und der Gelenkbuchse 3 ausgebildeten ringförmigen Lagerspalt 1, der durch den Federbereich 71 überbrückt wird. Weiterhin verdeutlicht Fig. 9 das Verkeilen des Klemmbereichs 81 mit seiner gebogenen Stirnkante an der Oberfläche des Gelenkbolzens 4.

Fig. 10 zeigt eine vergrößerte Darstellung des den ringförmigen Lagerspalt 1 überbrückenden Federbereichs 71, der beim Einsetzen des Spielausgleichselements 5 in den ringförmigen Lagerspalt 1 infolge seiner Federelastizität linienförmige Anlagen L1, L2 am Gelenkbolzen 4 sowie eine flächenförmige Anlage F an der Gelenkbuchse 3 ausbildet. Infolge der Wölbung und federelastischen Ausbildung der Federbereiche 71, 72, 73 wird somit das radiale Spiel zwischen dem Gelenkbolzen 4 und der Gelenkbuchse 3 vollständig ausgeglichen.

Fig. 11 verdeutlicht in einer vergrößerten Detailansicht den Bereich XI gemäß Fig. 8 und zeigt den Federbereich 73, der den ringförmigen Lagerspalt 1 zwischen dem Gelenkbolzen 4 und der Gelenkbuchse 3 ausgleicht und infolge seiner Federelastizität linienförmige Anlagen L1, L2 am Gelenkbolzen 4 sowie eine flächenförmige Anlage F an der Gelenkbuchse 3 ausbildet. Fig. 11 verdeutlicht gleichzeitig, dass die linienförmigen Anlagen L1, L2 am Gelenkbolzen 4 durch den gegenüber dem Radius R_{L} des ringförmigen Lagerspalts 1 kleineren Radius R_{F} des Federbereichs 73 entsteht. Diese Formgebung der Federbereiche 71, 72, 73 in Verbindung mit deren Federelastizität ist erforderlich, um auch große Toleranzen zu überbrücken, ohne dass es zu einem Verklemmen zwischen dem Gelenkbolzen 4 und der Gelenkbuchse 3 kommt. Dies ist beispielsweise in dem Anwendungsfall gemäß Fig. 1 von Bedeutung, damit ein begrenzter Schwenkwinkel des Querrohrs 4a gegenüber den Sitzseitenteilen 3a, 3b gewährleistet ist.

Bei der Herstellung der Gelenkverbindung kommt es zu zwei einander überlagerten Verformungen der Federbereiche 71, 72, 73, nämlich einem Herunterdrücken im Sinne eines schwenkenden Einfederns und einem Plattdrücken im Sinne einer elastischen Deformation des gewölbten Bereichs der Federbereiche 71, 72, 73 in Richtung auf eine größer werdenden Radius R_{F} der federbereiche 71, 72, 73 beim Einsetzen des Spielausgleichselements 5 in den ringförmigen Lagerspalt 1.

### Bezugszeichenliste

- 1: ringförmiger Lagerspalt
- 2a, 2b: Schienenlängsführungen
- 3: Gelenkbuchse
- 3a, 3b: Sitzseitenteile
- 4: Gelenkbolzen oder Gelenkrohr
- 5: Spielausgleichselement
- 6: Grundkörper
- 9: Ausnehmungen
- 11, 12: hintere Schwenkstützen
- 30: Stirnfläche der Gelenkbuchse
- 60: ringförmige Flansch des Grundkörpers
- 71, 72, 73: Federbereiche
- 81, 82, 83: Klemmbereiche
- L1, L2: linienförmige Anlagen
- F: flächenförmige Anlage
- R_{F}: Radius der Federbereiche
- R_{L}: (Außen-) Radius des Gelenkbolzens/Gelenkrohrs
- R_{B}: Innenradius der Gelenkbuchse
- R_{FG}: Grund- oder Innenradius des Spielausgleichselements
- R_{FA}: Außenradius der Federbereiche

## Patentansprüche

1. Gelenkverbindung mit mindestens einer Gelenkbuchse und einem in der Gelenkbuchse mit radialem Spiel unter Belassung eines ringförmigen Lagerspalts drehbar gelagerten Gelenkbolzen oder Gelenkrohr, sowie einem das radiale Spiel ausgleichenden Spielausgleichselement, insbesondere für Verstelleinrichtungen in Kraftfahrzeugen, wobei das Spielausgleichselement (5) mehrere in den ringförmigen Lagerspalt (1) greifende, gewölbte Federbereiche (71, 72, 73) aufweist, deren Radien (R_{F}) kleiner sind als der Radius (R_{L}) des Gelenkbolzens oder Gelenkrohrs (4),
**dadurch gekennzeichnet,**
**dass** zur axialen Sicherung der Gelenkverbindung mindestens ein sich am Gelenkbolzen (4) abstützender Klemmbereich (81, 82, 83) vom Grundkörper (6) des Spielausgleichselements (5) absteht.

2. Gelenkverbindung nach Anspruch 1, **dadurch gekennzeichnet, dass** das Spielausgleichselement (5) einen scheiben- oder napfförmigen Grundkörper (6) aufweist, und die Federbereiche (71, 72, 73) einen spitzen Winkel (α) zur Gelenkachse einschließend über den Grundkörper (6) hinausragen.

3. Gelenkverbindung nach mindestens einem der voranstehenden Ansprüche, **dadurch gekennzeichnet, dass** die im ringförmigen Lagerspalt (1) eingepassten Federbereiche (71, 72, 73) mit ihrer randseitigen Kontur linienförmig (L1, L2) am Gelenkbolzen (4) anliegen.

4. Gelenkverbindung nach mindestens einem der voranstehenden Ansprüche, **dadurch gekennzeichnet, dass** die im ringförmigen Lagerspalt (1) eingepassten Federbereiche (71, 72, 73) mit einem Teil ihrer nach außen gerichteten Fläche (F) in einem Bereich zwischen den linienförmigen Anlagen (L1, L2) der Federbereiche (71, 72, 73) am Gelenkbolzen (4) an der Gelenkbuchse (3) anliegen.

5. Gelenkverbindung nach mindestens einem der voranstehenden Ansprüche, **dadurch gekennzeichnet, dass** das Spielausgleichselement (5) mindestens drei an seinem Umfang gleichmäßig verteilte Federbereiche (71, 72, 73) aufweist.

6. Gelenkverbindung nach mindestens einem der voranstehenden Ansprüche, **dadurch gekennzeichnet, dass** die Federbereiche (71, 72, 73) aus einem geformten und vergüteten Federstahl bestehen.

7. Gelenkverbindung nach mindestens einem der voranstehenden Ansprüche, **dadurch gekennzeichnet, dass** der auf den Mittelpunkt des Spielausgleichselements (5) bezogene Außenradius (R_{FA}) der gewölbten Federbereiche (71, 72, 73) größer oder gleich dem Innenradius (R_{B}) der Gelenkbuchse (3) ist.

8. Gelenkverbindung nach mindestens einem der voranstehenden Ansprüche, **dadurch gekennzeichnet, dass** der Klemmbereich (81, 82, 83) über die den Federbereichen (71, 72, 73) entgegengesetzte Seite des Grundkörpers (6) des Spielausgleichselements (5) hinausragt.

9. Gelenkverbindung nach mindestens einem der voranstehenden Ansprüche, **dadurch gekennzeichnet, dass** der Grundkörper (6) napfförmig ausgebildet ist und am Umfang gleichmäßig verteilte Klemmbereiche (81, 82, 83) aufweist.

10. Gelenkverbindung nach mindestens einem der voranstehenden Ansprüche, **dadurch gekennzeichnet, dass** die Klemmbereiche (81, 82, 83) als stegartige Klemmelemente in den Grundkörper (6) integriert sind.

11. Gelenkverbindung nach mindestens einem der voranstehenden Ansprüche, **dadurch gekennzeichnet, dass** die Klemmbereiche (81, 82, 83) zwischen den Federbereichen (71, 72, 73) angeordnet ist.

12. Gelenkverbindung nach mindestens einem der voranstehenden Ansprüche, **dadurch gekennzeichnet, dass** jeweils drei Feder- und Klemmbereiche (71, 72, 73; 81, 82, 83) abwechselnd über den Umfang des Grundkörpers (6) verteilt über die eine und andere Seite des Grundkörpers (6) hinausragen und jeweils durch einen kleinen radialen Ausschnitt (9) zur Entkopplung der Wirkungen der Feder- und Klemmbereiche voneinander getrennt sind.

13. Gelenkverbindung nach mindestens einem der voranstehenden Ansprüche, **dadurch gekennzeichnet, dass** der auf den Mittelpunkt des Spielausgleichselements (5) bezogene Grundradius (R_{FG}) des Spielausgleichselements (5) größer oder gleich dem Radius des Gelenkbolzens (4) bzw. Außenradius des Gelenkrohrs (4) ist.

14. Gelenkverbindung nach mindestens einem der voranstehenden Ansprüche, **dadurch gekennzeichnet, dass** der Grundkörper (6) an einer Stirnfläche der Gelenkbuchse (3) anliegt.

15. Gelenkverbindung nach Anspruch 14, **dadurch gekennzeichnet, dass** der napfförmig ausgebildete Grundkörper (6) mit einer parallel zur Stirnfläche (30) der Gelenkbuchse (3) verlaufenden ringförmigen Anlagefläche (60) an der Stirnfläche (30) der Gelenkbuchse (3) anliegt.

## Claims

1. Articulated joint with at least one joint bush and one joint bolt or joint pipe mounted rotatable with radial play in the joint bush whilst leaving an annular bearing gap, as well as with a play compensation element for compensating the radial play, more particularly for adjusting devices in motor vehicles, wherein the play compensation element (5) has several curved spring sections (71, 72, 73) engaging in the annular bearing gap (1) and whose radii (R_{F}) are smaller than the radius (R_{L}) of the joint bolt or joint pipe (4)
**characterised in that**
to axially secure the articulated joint at least one clamping region (81, 82, 83) supported on the joint bolt (4) protrudes from the base body (6) of the play compensation element (5).

2. Articulated joint according to claim 1, **characterised in that** the play compensation element (5) has a disc-shaped or dish-shaped base body (6) and the spring sections (71, 72, 73) project over the base body (6) making an acute angle (α) with the joint axis.

3. Articulated joint according to at least one of the preceding claims, **characterised in that** the spring sections (71, 72, 73) fitted in the annular bearing gap (1) bear against the joint bolt (4) linearly (L1, L2) through their contoured edge.

4. Articulated joint according to at least one of the preceding claims, **characterised in that** the spring sections (71, 72, 73) fitted in the annular bearing gap (1) bear against the joint bush (3) through a part of their outwardly directed surface (F) in a region between the linear contact bearing points (L1, L2) of the spring sections (71, 72, 73) against the joint bolt (4).

5. Articulated joint according to at least one of the preceding claims, **characterised in that** the play compensation element (5) has at least three spring sections (71, 72, 73) spread out uniformly around the periphery.

6. Articulated joint according to at least one of the preceding claims, **characterised in that** the spring sections (71, 72, 73) consist of a shaped and tempered spring steel.

7. Articulated joint according to _at least one of the preceding claims, **characterised in that** the outer radius (R_{FA}) of the curved spring sections (71, 72, 73) in relation to the centre point of the play compensation element (5) is larger than or equal to the inner radius (R_{B}) of the joint bush (3).

8. Articulated joint according to at least one of the preceding claims, **characterised in that** the clamping region (81, 82, 83) projects over the side of the base body (6) of the play compensation element (5) opposite the spring sections (71, 72, 73).

9. Articulated joint according to at least one of the preceding claims, **characterised in that** the base body (6) is designed dish-shaped and has clamping regions (81, 82, 83) spread uniformly around the periphery.

10. Articulated joint according to at least one of the preceding claims, **characterised in that** the clamping regions (81, 82, 83) are integrated as web-type clamping elements in the base body (6).

11. Articulated joint according to at least one of the preceding claims, **characterised in that** the clamping regions (81, 82, 83) are arranged between the spring sections (71, 72, 73).

12. Articulated joint according to at least one of the preceding claims, **characterised in that** each three spring and three clamping sections (71, 72, 73; 81, 82, 83) project over the one and other side of the base body (6) in alternation spread out round the periphery of the base body (6) and are each separated from each other through a small radial cut-out section (9) to uncouple the actions of the spring and clamping sections.

13. Articulated joint according to at least one of the preceding claims, **characterised in that** the base radius (R_{FG}) of the play compensation element (5) in relation to the centre point of the play compensation element (5) is greater than or equal to the radius of the joint bolt (4) or outer radius of the joint pipe (4).

14. Articulated joint according to at least one of the preceding claims, **characterised in that** the base body (6) bears against an end face of the joint bush (3).

15. Articulated joint according to claim 14, **characterised in that** the dish-shaped base body (6) bears against the end face (30) of the joint bush (3) through a ring-shaped contact bearing surface (60) which runs parallel to the end face (30) of the joint bush (3).

## Revendications

1. Joint d'articulation, comprenant au moins un manchon d'articulation et un tenon ou un tube d'articulation monté en rotation dans le manchon d'articulation avec jeu radial en ménageant une fente de montage de forme annulaire, ainsi qu'un élément de compensation de jeu qui compense le jeu radial, en particulier pour des dispositifs de réglage dans des véhicules automobiles, dans lequel l'élément de compensation de jeu (5) comprend plusieurs zones élastiques bombées (71, 72, 73) engagées dans la fente de montage annulaire (1), dont les rayons (R_{F}) sont inférieurs au rayon (R_{L}) du tenon ou du tube d'articulation (4),
**caractérisé en ce que**
pour le blocage axial du joint d'articulation, au moins une zone de serrage (81, 82, 83) en appui contre le tenon d'articulation (4) dépasse du corps de base (6) de l'élément de compensation de jeu (5).

2. Joint d'articulation selon la revendication 1, **caractérisé en ce que** l'élément de compensation de jeu (5) comprend un corps de base (6) en forme de disque ou de godet, et les zones élastiques (71, 72, 73) dépassent au-delà du corps de base (6) en formant un angle aigu (α) par rapport à l'axe d'articulation.

3. Joint d'articulation selon l'une quelconque des revendications précédentes, **caractérisé en ce que** les zones élastiques (71, 72, 73) insérées dans la fente de montage annulaire (1) s'appliquent sur le tenon d'articulation (4) par leurs contours de bordure en formant une ligne (L1, L2).

4. Joint d'articulation selon l'une quelconque des revendications précédentes, **caractérisé en ce que** les zones élastiques (71, 72, 73) insérées dans la fente de montage annulaire (1) s'appliquent sur le manchon d'articulation (3) par une partie de leur surface dirigée vers l'extérieur (F), dans une région entre les contacts de forme linéaire (L1, L2) des zones élastiques (71, 72, 73) sur le tenon d'articulation (4).

5. Joint d'articulation selon l'une quelconque des revendications précédentes, **caractérisé en ce que** l'élément de compensation de jeu (5) comprend au moins trois zones élastiques (71, 72, 73) réparties régulièrement à sa périphérie.

6. Joint d'articulation selon l'une quelconque des revendications précédentes, **caractérisé en ce que** les zones élastiques (71, 72, 73) sont formées en acier à ressort mis en forme et traité.

7. Joint d'articulation selon l'une quelconque des revendications précédentes, **caractérisé en ce que** le rayon extérieur (R_{FA}), par référence au centre de l'élément de compensation de jeu (5), des zones élastiques bombées (71, 72, 73) est supérieur ou égal au rayon intérieur (R_{B}) du manchon d'articulation (3).

8. Joint d'articulation selon l'une quelconque des revendications précédentes, **caractérisé en ce que** la zone de serrage (81, 82, 83) dépasse au-delà du côté du corps de base (6) de l'élément de compensation de jeu (5) opposé aux zones élastiques (71, 72, 73).

9. Joint d'articulation selon l'une quelconque des revendications précédentes, **caractérisé en ce que** le corps de base (6) est réalisé en forme de godet et comprend des zones de serrage (81, 82, 83) régulièrement réparties à la périphérie.

10. Joint d'articulation selon l'une quelconque des revendications précédentes, **caractérisé en ce que** les zones de serrage (81, 82, 83) sont intégrées dans le corps de base (6) sous la forme d'éléments de serrage analogues à des barrettes.

11. Joint d'articulation selon l'une quelconque des revendications précédentes, **caractérisé en ce que** les zones de serrage (81, 82, 83) sont agencées entre les zones élastiques (71, 72, 73).

12. Joint d'articulation selon l'une quelconque des revendications précédentes, **caractérisé en ce que** trois zones élastiques et trois zones de serrage (71, 72, 73 ; 81, 82, 83) respectives dépassent alternativement sur un côté et sur l'autre coté du corps de base (6) en étant réparties sur la périphérie du corps de base (6) et sont respectivement séparées par une petite découpe radiale (9) pour découpler les effets des zones élastiques et des zones de serrage.

13. Joint d'articulation selon l'une quelconque des revendications précédentes, **caractérisé en ce que** le rayon de base (R_{FG}) de l'élément de compensation de jeu (5), par référence au centre de l'élément de compensation de jeu (5), est supérieur ou égal au rayon du tenon d'articulation (4) ou au rayon extérieur du tube d'articulation (4).

14. Joint d'articulation selon l'une quelconque des revendications précédentes, **caractérisé en ce que** le corps de base (6) est appliqué contre une surface frontale du manchon d'articulation (3).

15. Joint d'articulation selon la revendication 14, **caractérisé en ce que** le corps de base (6), réalisé en forme de godet, est appliqué contre la surface frontale (30) du manchon d'articulation (3) par une surface d'appui (60) annulaire qui s'étend parallèlement à la surface frontale (30) du manchon d'articulation (3).
